# FASCICULE DE BREVET EUROPEEN

(11) **EP 0 717 935 B1**
(45) Date de publication et mention de la délivrance du brevet: **07.03.2001**
(21) Numéro de dépôt: 94810747.9
(22) Date de dépôt: 22.12.1994
(51) Int. Cl.: A23L 1/164, A23L 1/212, A23L 1/20

(54) **Céréales aux légumes**
Getreideprodukte mit Gemüse
Cereal products containing vegetables

(43) Date de publication de la demande: 26.06.1996
(73) Titulaire: SOCIETE DES PRODUITS NESTLE S.A., 1800 Vevey (CH)
(72) Inventeur: Reimerdes, Ernst H., CH-1009 Pully (CH); Dupart, Pierre, CH-1028 Preverenges (CH); Geromini, Osvaldo, CH-1358 Valeyres (CH); Desjardins, Jean-Jacques, CH-1026 Denges (CH)
(74) Mandataire: Wavre, Claude-Alain

(56) Documents cités:
- FR-A- 944 589
- GB-A- 2 014 423
- US-A- 5 188 860

## Description

La présente invention a pour objet des céréales aux légumes instantanées et un procédé de préparation de telles céréales.

On connaît divers procédés de préparation, par cuisson-extrusion, de céréales instantanées, notamment pour l'alimentation infantile.

WO 93/17592 (SCHAAF TECHNOLOGIE GMBH) décrit un procédé de préparation de céréales instantanées, notamment de céréales aux légumes instantanées, dans lequel on cuit-extrude à 130-160°C un mélange de céréales auquel on peut ajouter des légumes secs et de la purée de légumes, par exemple, et qui présente une teneur en eau de 19-22%, on laisse le mélange cuit-extrudé s'expanser dans une chambre d'expansion suivant immédiatement la sortie de la filière de l'extrudeur, et l'on découpe le mélange cuit-extrudé à la sortie de la chambre d'expansion en morceaux présentant une porosité ouverte sur la tranche, ces morceaux pouvant être utilisés dans des mélanges pour bouillies instantanées, par exemple.

La présente invention a pour but de proposer des céréales aux légumes instantanées qui ne se désagrègent pas au contact avec un liquide mais restent au contraire croustillantes durant un temps relativement long.

A cet effet, les céréales aux légumes instantanées selon la présente invention comprennent, en % en poids de matière sèche, 2-90%, de préférence 2-50% de légume, 8-96%, de préférence 48-96% de céréale, 2-15% de matière grasse ajoutée, 0-1% d'un sel de calcium, 0-1% de chlorure de sodium, 0-5% de matière protéique ajoutée et 0-1,5% d'un agent colorant, et elles présentent une densité apparente de 100-500 g/l, de préférence 200-500 g/l, et une teneur en eau de 1,5-15%.

De même, dans le procédé de préparation de flocons de céréales aux légumes instantanées selon la présente invention, on cuit-extrude dans un extrudeur un mélange présentant une teneur en eau comprise entre plus de 23 et 70% en poids et comprenant, en parties en poids, de 9-110 parties, de préférence de 50-110 parties de céréale, de 7-300 parties, de préférence de 7-170 parties d'une purée de légume, 0-20 parties de poudre de légume, 2-15 parties de matière grasse ajoutée, 0-1% d'un sel de calcium, 0-1% de chlorure de sodium, 0-5% de matière protéique ajoutée et 0-1,5% d'un agent colorant, on aspire et/ou on laisse échapper avant la sortie de l'extrudeur une quantité de vapeur d'eau telle que le mélange cuit-extrudé présente après la sortie de l'extrudeur une teneur en eau de 15-23%, on découpe le mélange cuit-extrudé à la sortie de l'extrudeur et on le sèche.

On a constaté que les présentes céréales aux légumes présentant ces caractéristiques, et le présent procédé permettant de produire de telles céréales aux légumes, répondent de manière surprenante au but fixé.

Ces céréales aux légumes peuvent en effet être consommées telles quelles ou comme ingrédient essentiel dans la préparation d'un dessert au lait ou au yogourt, d'un bircher müesli, d'un porridge ou d'un potage instantané, elles présentent à chaque fois une croustillance remarquable, même après quelques min dans un liquide froid, chaud ou même bouillant, par exemple.

Ceci est dû au fait qu'elles présentent une porosité relativement faible et non ouverte en surface, une densité apparente relativement élevée et une texture relativement solide qui ne ramollit que lentement au contact d'un liquide, grâce notamment à leur teneur en huile.

De préférence, dans les présentes céréales aux légumes, l'amidon présente un degré de gélatinisation de 50-92%, plus particulièrement de 70-90%. Un tel degré de gélatinisation de l'amidon favorise en effet une certaine résistance au ramollissement des présentes céréales lors de l'absorption d'un liquide dans lequel elles sont plongées, tout en étant suffisant pour leur conférer la caractéristique d'instantanéité.

Ledit légume peut être tout légume-feuille, légume-fruit, légume-racine, légume-graine ou légume-tubercule qui présente une teneur notable en fibres végétales, tel que les épinards, un haricot, un pois, la lentille, la carotte ou l'igname, par exemple, ces fibres végétales contribuant à la solidité de la texture des présentes céréales aux légumes.

Ladite céréale peut être toute céréale, notamment toute céréale relativement pauvre en gluten telle que le maïs ou le riz, par exemple.

Ladite matière grasse ajoutée est destinée d'une part à aider à la coupe du mélange cuit-extrudé et d'autre part à renforcer et stabiliser la texture des présentes céréales aux légumes en freinant la reprise d'eau, à savoir en empêchant l'eau d'accéder trop rapidement à la matrice d'amidon. A cet effet, ladite matière grasse ajoutée est de préférence une huile végétale ou animale présentant un point de fusion supérieur à environ 35°C ainsi qu'une bonne résistance à l'oxydation, telle que l'huile de palme hydrogénée, par exemple.

Ledit sel de calcium peut être tout sel de calcium comestible susceptible de contribuer à une relative solidité de la texture des flocons, notamment le carbonate ou le phosphate de calcium, par exemple.

Ladite matière protéique ajoutée est destinée à renforcer la texture des présentes céréales aux légumes et à freiner la reprise d'eau. A cet effet, ladite matière protéique ajoutée peut être un caséinate ou du gluten, par exemple. Elle est de préférence un mélange de caséinate de sodium et de caséinate de calcium, le premier étant plus soluble que le second mais le second conférant plus de dureté aux présentes céréales aux légumes que le premier.

Ledit agent colorant peut être tout agent colorant autorisé pour l'usage alimentaire, notamment pour l'usage dans des aliments pour enfants, en particulier une oléorésine d'épice telle que le paprica, par exemple.

Pour mettre en oeuvre le procédé selon la présente invention, on peut utiliser un extrudeur à une ou deux vis tournant à 200-500 tours/min, dont le manteau présente une ou plusieurs ouvertures d'alimentation en amont, au moins une ouverture d'échappement ou aspiration de vapeur en aval et une double paroi pour la circulation d'un liquide de réchauffement, par exemple. Cet extrudeur peut être équipé d'une filière à un ou plusieurs orifices de sortie, de section circulaire ou en forme de motif aisément reconnaissable tel qu'une étoile, un lapin ou une carotte, de environ 1-10 mm de diamètre, ainsi que d'un couteau rotatif dont les lames glissent contre lesdits orifices de sortie, par exemple.

Le mélange que l'on peut cuire-extruder avec un tel extrudeur présente donc une teneur en eau comprise entre plus de 23 et 70%, de préférence entre plus de 23 et 60% en poids. Cette teneur en eau relativement élevée est destinée à empêcher l'expansion du mélange à la sortie de l'extrudeur, en coopération avec lesdits 2-10% de matière grasse ajoutée et lesdites fibres.

Cette teneur en eau du mélange à cuire-extruder est apportée principalement par ledit légume sous forme de purée, autrement dit sous forme de légume frais ou congelé réduit en purée par broyage, par exemple. Mais la teneur en matière sèche de légume des présentes céréales peut donc être ajustée par un apport dudit légume sous forme de poudre, autrement dit sous forme de légume réduit en poudre par déshydratation et broyage, par exemple.

On doit laisser échapper avant la sortie de l'extrudeur une quantité de vapeur d'eau telle que le mélange cuit-extrudé présente après la sortie une teneur en eau de 15-23%, de préférence 17-23%. En effet, si le mélange cuit-extrudé présente une teneur en eau supérieure à 23%, on risque de ne pas pouvoir le découper à la sortie de l'extrudeur parcequ'il colle aux lames du couteau rotatif. Et si le mélange cuit-extrudé présente une teneur en eau inférieure à 15%, voire 17%, on risque de provoquer son expansion trop forte à la sortie de l'extrudeur et d'affaiblir et déstabiliser la texture des présentes céréales aux légumes.

On peut cuire-extruder ledit mélange à 140-250°C, de préférence à une température comprise entre plus de 160°C et 200°C, durant 20-60 s sous 10-100 bar. Ce domaine de températures relativement élevées est recommandable pour obtenir une bonne aspiration et/ou un bon échappement de vapeur d'eau avant la sortie de l'extrudeur. Ce domaine de durées relativement courtes est recommandable pour rester en deçà d'un degré de gélatinisation de 100% de l'amidon contenu dans le mélange, notamment pour obtenir ledit degré de gélatinisation préféré de 50-92%, plus particulièrement de 70-90%.

En découpant le mélange cuit-extrudé à la sortie de l'extrudeur, on peut obtenir des boulettes dont la forme générale est conférée par la forme de la section des orifices de sortie de la filière. On peut obtenir ainsi des boulettes sphériques ou présentant la forme générale de motifs aisément reconnaissables tels que des étoiles, des lapins ou des carottes, par exemple.

Dans un mode de réalisation particulier du présent procédé, on lamine de telles boulettes en flocons. Pour ce faire, on peut utiliser a laminoir à plusieurs cylindres à interstices et pression exercée réglables. De préférence, on lamine ainsi lesdites boulettes en flocons de 0,5 à 2mm d'épaisseur.

On peut enfin sécher les présentes céréales aux légumes, sous forme de boulettes ou de flocons, jusqu'à une teneur en eau résiduelle de 1,5-15%, de préférence 3-10%, dans un séchoir à air chaud à pression atmosphérique ou sous pression réduite, par exemple.

Ces céréales aux légumes peuvent donc être consommées telles quelles ou comme ingrédient essentiel dans la préparation d'un dessert au lait ou au yogourt, d'un bircher müesli, d'un porridge ou d'un potage instantané, par exemple. Mais elles peuvent également être présentées sous forme de céréales complètes à la surface desquelles adhèrent d'autres ingrédients, ajoutés après la cuisson-extrusion, tels que des graines, notamment des graines de sésame, des herbes aromatiques, des épices et/ou des composants de base traditionnels de soupes ou bouillons instantanés, par exemple.

Les exemples ci-après illustrent diverses formes de réalisation des céréales aux légumes et du procédé de préparation de céréales aux légumes selon la présente invention. Les pourcentages et parties y sont indiqués en poids.

### Exemple 1

On alimente en continu un extrudeur bivis de 1,2 m de longueur avec les divers composants d'un mélange présentant une teneur en eau de 28,7%.

Le manteau de l'extrudeur présente plusieurs ouvertures d'alimentation en amont, une ouverture d'échappement de vapeur en aval et une double paroi pour la circulation d'un liquide de réchauffement. La filière de l'extrudeur présente deux orifices de sortie de section circulaire de 3 mm de diamètre. Le mélange des divers composants est réalisé dans l'extrudeur lui-même.

Les divers composants, leur teneur en eau, leur débit d'alimentation et le pourcentage que représente leur matière sèche (DM) dans la matière sèche totale (DMtot) du mélange sont présentés dans le tableau 1 ci-après:

**Tableau 1**

| Composant | teneur en eau (%) | débit (kg/h) | DM/DMtot (%) |
|---|---|---|---|
| Farine de maïs | 11 | 80 | 86,9 |
| Purée de carottes | 92 | 27 | 2,7 |
| Huile de palme hydrogénée | - | 8 | 9,8 |
| Colorant (10% d'oléorésine de paprica + 90% d'huile) | - | 0,5 | 0,6 |

On fait tourner les vis de l'extrudeur à 350 tours/min. On cuit-extrude à 195°C durant 30 s sous 28 bar tout en laissant échapper une quantité de vapeur telle que le mélange cuit-extrudé présente une teneur en eau de 16%.

On découpe les boudins de mélange cuit-extrudé sortant de la filière en boulettes de environ 4 mm de diamètre avec un couteau rotatif dont les lames glissent contre les orifices de sortie.

On lamine les boulettes entre des cylindres de 20 cm de diamètre tournant à 500 tours/min, en maintenant la température de surface des cylindres à 20°C et en exerçant sur les cylindres une pression de 24 bar.

On sèche les boulettes laminées jusqu'à une teneur en eau de 5%.

On obtient des flocons croustillants de 1,0-1,4 mm d'épaisseur qui présentent une belle couleur orange-carotte, un degré de gélatinisation de 75% et une densité apparente de 330 g/l.

Leur forme, leur taille et leur croustillance se maintiennent bien même après un séjour de quelques min dans un liquide froid, chaud ou même bouillant.

### Exemple 2

On alimente en continu un extrudeur bivis de 1,2 m de longueur avec les divers composants d'un mélange présentant me teneur en eau de 29,8%.

Le manteau de l'extrudeur présente plusieurs ouvertures d'alimentation en amont, une ouverture d'échappement de vapeur en aval et une double paroi pour la circulation d'un liquide de réchauffement. La filière de l'extrudeur présente deux orifices de sortie de section circulaire de 3 mm de diamètre. Le mélange des divers composants est réalisé dans l'extrudeur lui-même.

Les divers composants, leur teneur en eau, leur débit d'alimentation et le pourcentage que représente leur matière sèche (DM) dans la matière sèche totale (DMtot) du mélange sont présentés dans le tableau 2 ci-après:

**Tableau 2**

| Composant | teneur en eau (%) | débit (kg/h) | DM/DMtot (%) |
|---|---|---|---|
| Farine de maïs | 11 | 80 | 77,3 |
| Purée de haricots rouges | 72 | 41,9 | 12,7 |
| Huile de palme hydrogénée | - | 8 | 8,7 |
| Colorant (10% d'oléorésine de paprica + 90% d'huile) | - | 1,2 | 1,3 |

On fait tourner les vis de l'extrudeur à 350 tours/min. On cuit-extrude à 190°C durant 30 s sous 28 bar tout en aspirant une quantité de vapeur telle que le mélange cuit-extrudé présente une teneur en eau de 20%.

On découpe les boudins de mélange cuit-extrudé sortant de la filière en boulettes de environ 4 mm de diamètre avec un couteau rotatif dont les lames glissent contre les orifices de sortie.

On lamine les boulettes entre des cylindres de 20 cm de diamètre tournant à 500 tours/min, en maintenant la température de surface des cylindres à 20°C et en exerçant sur les cylindres une pression de 24 bar.

On sèche les boulettes laminées jusqu'à une teneur en eau de 8%.

On obtient des flocons croustillants de 1,0-1,5 mm d'épaisseur qui présentent une couleur brun-rouge, un degré de gélatinisation de 72% et une densité apparente de 300 g/l.

Leur forme, leur taille et leur croustillance se maintiennent bien même après un séjour de quelques min dans un liquide froid, chaud ou même bouillant.

### Exemples 3-5

Dans des conditions opératoires semblables à celles décrites à l'exemple 1, à l'exception du fait que la filière de l'extrudeur présente des orifices de sortie en forme d'étoile, de lapin ou de carotte, et que l'on ne lamine pas les boulettes obtenues en découpant les boudins de mélange cuit-extrudé sortant de la filière, on prépare des céréales aux légumes présentant les compositions respectives présentées dans le tableau 3 ci-après. Les chiffres indiqués représentent le pourcentage de matière sèche (DM) de chaque composant dans la matière sèche totale (DMtot) des boulettes.

**Tableau 3**

| Composant | Exemple 3 | Exemple 4 | Exemple 5 |
|---|---|---|---|
| Farine de maïs | 77,46 | 86,5 | 80,45 |
| Purée de haricots rouges | 13,3 | - | - |
| Purée de carottes | - | 3,25 | - |
| Purée de pois verts | - | - | 10,0 |
| Huile de palme hydrogénée | 8,8 | 9,75 | 9,1 |
| Carbonate de calcium | 0,44 | - | 0,45 |
| Caséinate de calcium | - | 0,25 | - |
| Caséinate de sodium | - | 0,25 | - |

Toutes ces boulettes croustillantes, en forme d'étoiles, de lapins ou de carottes, présentent une couleur qui rappelle celle du légume qu'elles contiennent, un degré de gélatinisation de 70-90%, une densité apparente de 200-450 g/l et une teneur en eau de 5-8%.

Leur forme, leur taille et leur croustillance se maintiennent bien même après un séjour de plusieurs min dans un liquide foid, chaud ou même bouillant.

### Exemple 6

On utilise un mélange des boulettes croustillantes aux carottes et aux pois verts préparées aux exemples 4 et 5, à raison de 50% en poids dans une composition sèche dont l'autre moitié se compose elle-même de:

| | |
|---|---|
| lait acidifié en poudre | 67,0% |
| gomme guar | 1,5% |
| sucre | 10,0% |
| sel et épices | 1,0% |
| malt | 9,5% |
| noix de coco râpée | 7,5% |
| acide citrique | 3,5% |

Cette composition se consomme en dispersion dans du lait, à raison de 38 g de composition par 100 g de lait, comme dessert au lait salé, froid, nutritif et rafraîchissant.

## Revendications

1. Céréales aux légumes instantanées, comprenant, en % en poids de matière sèche, 2-90% de légume, 8-96% de céréale, 2-15% de matière grasse ajoutée, 0-1% d'un sel de calcium, 0-1% de chlorure de sodium, 0-5% de matière protéique ajoutée et 0-1,5% d'un agent colorant, et présentant une densité apparente de 100-500 g/l et une teneur en eau de 1,5-15%.

2. Céréales aux légumes selon la revendication 1, dans lesquelles l'amidon présente un degré de gélatinisation de 50-92%.

3. Céréales aux légumes selon la revendication 1, dans lesquelles ledit légume est un haricot, un pois, la lentille ou la carotte, ladite céréale est le maïs ou le riz, ledit sel de calcium est le carbonate ou le phosphate de calcium et ladite protéine ajoutée est a mélange de caséinate de sodium et de caséinate de calcium.

4. Céréales aux légumes selon la revendication 1, en forme de boulettes ou de flocons.

5. Procédé de préparation de céréales aux légumes instantanées, dans lequel on cuit-extrude dans a extrudeur un mélange présentant une teneur en eau comprise entre plus de 23 et 70% en poids et comprenant, en parties en poids, de 9-110 parties de céréale, de 7-300 parties d'une purée de légume, 0-20 parties de poudre de légume, 2-10 parties de matière grasse ajoutée, 0-1% d'un sel de calcium, 0-1% de chlorure de sodium, 0-5% de matière protéique ajoutée et 0-1,5% d'un agent colorant, on aspire et/ou on laisse échapper avant la sortie de l'extrudeur une quantité de vapeur d'eau telle que le mélange cuit-extrudé présente après la sortie de l'extrudeur une teneur en eau de 15-23%, on découpe le mélange cuit-extrudé à la sortie de l'extrudeur et on le sèche.

6. Procédé selon la revendication 5, dans lequel on cuit-extrude ledit mélange à 140-250°C durant 20-60 s sous 10-100 bar.

7. Procédé selon la revendication 5, dans lequel on découpe le mélange cuit-extrudé en boulettes.

8. Procédé selon la revendication 7, dans lequel on lamine lesdites boulettes en flocons de 0,5 à 2 mm d'épaisseur.

9. Procédé selon la revendication 5, dans lequel ledit légume est un haricot, un pois, la lentille ou la carotte, ladite céréale est le maïs ou le riz, ledit sel de calcium est le carbonate ou le phosphate de calcium et ladite protéine ajoutée est un mélange de caséinate de sodium et de caséinate de calcium.

## Claims

1. Instant cereals containing vegetables, comprising in percentage by weight of dry matter, 2-90 % of vegetables, 8-96 % of cereal, 2-15 % of added fats, 0-1 % of a calcium salt, 0-1 % of sodium chloride, 0-5 % of added proteinaceous matter and 0-1.5 % of colouring agent, and having an apparent density of 100-500 g/1 and a water content of 1.5-15 %.

2. The cereals containing vegetables as claimed in claim 1, wherein the starch has a degree of gelatinization of 50-92 %.

3. The cereals containing vegetables as claimed in claim 1, wherein the said vegetable is a bean, pea, lentil or carrot, the said cereal is maize or rice, the said calcium salt is calcium carbonate or phosphate and the said added protein is a mixture of sodium caseinate and calcium caseinate.

4. The cereals containing vegetables as claimed in claim 1, in the form of pellets or flakes.

5. A process for preparing instant cereals containing vegetables, wherein a mixture is extrusion-cooked in an extruder, this mixture having a water content of between more than 23 and 70 % by weight and comprising, in parts by weight, 9-110 parts of cereal, 7-300 parts of a vegetable puree, 0-20 parts of vegetable powder, 2-10 parts of added fats, 0-1 % of a calcium salt, 0-1 % of sodium chloride, 0-5 % of added proteinaceous matter and 0-1.5 % of a colouring agent, a quantity of steam is drawn off and/or is allowed to escape before the outlet from the extruder, such that the extrusion-cooked mixture has, after leaving the extruder, a water content of 15-23 %, the extrusion-cooked mixture is cut up at the outlet from the extruder and dried.

6. The process as claimed in claim 5, wherein the said mixture is extrusion-cooked at 140-250°C for 20-60 s under 10-100 bar.

7. The process as claimed in claim 5, wherein the extrusion-cooked mixture is cut up into pellets.

8. The process as claimed in claim 7, wherein the said pellets are rolled into flakes 0.5 to 2 mm thick.

9. The process as claimed in claim 5, wherein the said vegetable is a bean, a pea, a lentil or a carrot, the said cereal is maize or rice, the said calcium salt is calcium carbonate or phosphate and the said added protein is a mixture of sodium caseinate and calcium caseinate.

## Patentansprüche

1. Instant-Getreideprodukt mit Gemüse, das, in Gew.-% der Trockensubstanz, aufweist: 2-90 % Gemüse, 8-96 % Getreide, 2-15 % zugesetztes Fett, 0-1 % eines Calciumsalzes, 0-1 % Natriumchlorid, 0-5 % eines zugesetzten Proteinmaterials und 0-1,5 % eines Färbemittels, und das ein Schüttgewicht von 100-500 g/l und einen Wassergehalt von 1,5-15 % aufweist.

2. Getreideprodukt mit Gemüse nach Anspruch 1, bei dem die Stärke einen Verkleisterungsgrad von 50-92 % aufweist.

3. Getreideprodukt mit Gemüse nach Anspruch 1, bei dem das Gemüse eine Bohne, eine Erbse, eine Linse oder eine Karotte ist, das Getreide Mais oder Reis ist, das Calciumsalz Calciumcarbonat oder Calciumphosphat ist, und das zugesetzte Protein eine Mischung aus Natriumcaseinat und aus Calciumcaseinat ist.

4. Getreideprodukt mit Gemüse nach Anspruch 1 in Stückchenform oder in Flockenform.

5. Verfahren zur Herstellung eines Instant-Getreideprodukts mit Gemüse, bei dem man in einem Extruder eine Mischung kochextrudiert, die einen Wassergehalt aufweist, der zwischen 23 und 70 Gew.-% liegt, und die, in Gewichtsteilen, umfaßt: 9-110 Teile Getreide, 7-300 Teile eines Gemüsepürees, 0-20 Teile eines Gemüsepulvers, 2-10 Teile eines zugesetzten Fetts, 0-1 % eines Calciumsalzes, 0-1 % Natriumchlorid, 0-5 % eines zugesetzten Proteinmaterials und 0-1,5 % eines Färbemittels, vor dem Extruderausgang eine solche Wasserdampfmenge abzieht und/oder entweichen läßt, daß die kochextrudierte Mischung hinter dem Extruderausgang einen Wassergehalt von 15-23 % aufweist, die kochextrudierte Mischung am Extruderausgang schneidet und sie trocknet.

6. Verfahren nach Anspruch 5, bei dem man die Mischung bei 140-250°C für 20-60 s bei 10-100 bar kochextrudiert.

7. Verfahren nach Anspruch 5, bei dem man die kochextrudierte Mischung in Stückchen schneidet.

8. Verfahren nach Anspruch 7, bei dem man die Stückchen zu Flocken mit einer Dicke von 0,5 bis 2 mm walzt.

9. Verfahren nach Anspruch 5, bei dem das Gemüse eine Bohne, eine Erbse, eine Linse oder eine Karotte ist, das Getreide Mais oder Reis ist, das Calciumsalz Calciumcarbonat oder Calciumphosphat ist, und das zugesetzte Protein eine Mischung aus Natriumcaseinat und Calciumcaseinat ist.
